# EUROPEAN PATENT APPLICATION

(11) **EP 4 669 017 A1**
(43) Date of publication of application: **24.12.2025**
(21) Application number: 24755937.0
(22) Date of filing: 26.01.2024
(51) Int. Cl.: H04W 76/18

(54) **BEAM FAILURE PROCESSING METHOD AND APPARATUS, TERMINAL, AND NETWORK DEVICE**

(30) Priority: 16.02.2023 CN 202310181089
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2024/074138
(87) International publication number: WO 2024/169562

(57) **Abstract**

The present disclosure provides a beam failure processing method and apparatus, a terminal, and a network device. The method comprises: when a beam failure occurs on one or more target objects of a sidelink interface, executing the following operations: determining that a terminal has a radio link failure on the sidelink interface; or sending a first message to a network device, the first message being used for indicating that the terminal has a beam failure on the sidelink interface; or executing beam failure recovery on at least one other target object except for the target object, wherein the target object comprises a sidelink interface carrier or a bandwidth part (BWP).

## Description

The present disclosure claims the priority of Chinese Patent Application No. 202310181089.5, entitled "Beam Failure Processing Method, Apparatus, Terminal and Network Device" filed on February 16, 2023 before CNIPA, the disclosure of which is hereby incorporated by reference in its entirety.

### TECHNICAL FIELD

The present disclosure relates to the field of communications technologies, and in particular, to a beam failure processing method and apparatus, a terminal, and a network device.

### BACKGROUND

Direct communication (also referred to as sidelink communication) refers to a manner in which neighboring terminals may perform data transmission over a sidelink (SL) within a short range. The radio interface corresponding to the link is referred to as a direct communication interface (also referred to as a sidelink interface or a PC5 interface or a bypass interface). The related art introduces a mechanism for supporting SL on the FR2 frequency band, and beam management is a key problem that supports SL on FR2. In the related art, the terminal cannot determine the processing mode after the beam failure of the sidelink interface.

### SUMMARY

An objective of the present disclosure is to provide a beam failure processing method and apparatus, a terminal, and a network device, to resolve a problem that a terminal cannot determine a processing mode after a beam failure of a sidelink interface.

A beam failure processing method applied to a terminal is provided in some embodiments of the present disclosure, the method includes: when a beam failure occurs on one or more target objects of a sidelink interface, performing following operations: determining that a radio link failure occurs in the sidelink interface of the terminal; or sending a first message to a network device, wherein the first message is used to indicate that a beam failure occurs in the sidelink interface of the terminal; or performing beam failure recovery on at least one target object other than the one or more target objects; wherein the one or more target objects include a sidelink interface carrier or a bandwidth part (BWP).

Optionally, when the beam failure occurs on the one or more target objects of the sidelink interface, determining that the radio link failure occurs in the sidelink interface by the terminal includes: if a number of target objects used by the terminal in the sidelink interface is one or a number of target objects in an active state is one, and the beam failure of the terminal occurs on the one target object, determining that the radio link failure of the terminal occurs in the sidelink interface.

Optionally, when the beam failure occurs on the one or more target objects of the sidelink interface, performing the beam failure recovery on the at least one target object other than the one or more target objects, the method further includes: if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

Optionally, the first condition includes at least one or more of following: that the beam failure of the terminal occurs on all of the one or more target objects of the sidelink interface; that the beam failure of the terminal occurs on some of the one or more target objects of the sidelink interface, and the radio link failure occurs on a target object other than the some of the one or more target objects in the sidelink interface; that the beam failure of the terminal occurs on some of the one or more target objects of the sidelink interface, and beam failure recovery performed by the terminal using a target object other than the some of the one or more target objects fails.

Optionally, the method further includes: determining, under a second condition, that the radio link failure of the terminal occurs on the one or more target objects; wherein the second condition including at least one or more of: that a number of retransmissions indicated by a sidelink (SL) radio link control (Radio Link Control, RLC) entity on the one or more target objects reaches a maximum number of retransmissions; a target address or that a T400 timer corresponding to the one or more target objects expires; that a hybrid automatic repeat request (Hybrid Automatic Repeat Request, HARQ) discontinuous transmission (Discontinuous Transmission, DTX) count received by the terminal reaches a maximum value, wherein the HARQ DTX count is a continuous HARQ DTX count for the one or more target objects or for a target address; that an integrity check of a packet data convergence protocol (Packet Data Convergence Protocol, PDCP) entity corresponding to an SL signaling radio bearer (Signalling Radio Bearer, SRB) of a target address fails, wherein the SL SRB includes SL-SRB 2 and SL-SRB 3.

Optionally, when determining that the radio link failure occurs in the sidelink interface of the terminal, the method further includes: if the terminal is in a radio resource control (Radio Resource Control, RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, when the beam failure occurs on the one or more target objects of the sidelink interface, sending the first message to the network device includes: if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

Optionally, the first message includes at least one or more of: that the beam failure occurs in the terminal; a target object identifier of a target object on which the beam failure occurs in the terminal.

Optionally, the method further includes: receiving a third message from the network device, wherein the third message carries information of a first target object, the first target object is used to assist with beam failure recovery of the one or more target objects; performing beam failure recovery of the sidelink interface using the first target object.

A beam failure processing method applied to a network device is provided in the embodiments of the present disclosure, the method includes: receiving a first message from a terminal, wherein the first message is used to indicate that a beam failure occurs in a sidelink interface of the terminal; and/or receiving a second message from the terminal, wherein the second message is used to indicate that a radio link failure on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the first message includes at least one or more of: that the beam failure occurs in the terminal; a target object identifier of a target object on which the beam failure occurs in the terminal.

Optionally, after receiving the first message from the terminal, the method further includes at least one or more of: deactivating or de-configuring a target object on which the beam failure of the terminal occurs; sending a third message to the terminal, wherein the third message carries information of a first target object, the first target object is used to assist with beam failure recovery of the one or more target objects.

A terminal is provided in the embodiments of the present disclosure. The terminal includes: a memory, a transceiver, and a processor, wherein the memory is used to store a computer program; the transceiver is used to receive and send data under control of the processor; and the processor is used to read the computer program and perform following operations: when a beam failure occurs on one or more target objects of a sidelink interface, performing following operations: determining that a radio link failure occurs in the sidelink interface of the terminal; or sending a first message to a network device, wherein the first message is used to indicate that a beam failure occurs in the sidelink interface of the terminal; or performing beam failure recovery on at least one target object other than the one or more target objects; wherein the one or more target objects include a sidelink interface carrier or a bandwidth part (BWP).

Optionally, the processor is used to read the computer program and perform the following operations: if a number of target objects used by the terminal in the sidelink interface is one or a number of target objects in an active state is one, and the beam failure of the terminal occurs on the one target object, determining that the radio link failure of the terminal occurs in the sidelink interface.

Optionally, the processor is used to read the computer program and perform following operations: if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

Optionally, the first condition includes at least one or more of following: that the beam failure of the terminal occurs on all of the one or more target objects of the sidelink interface; that the beam failure of the terminal occurs on some of the one or more target objects of the sidelink interface, and the radio link failure occurs on a target object other than the some of the one or more target objects in the sidelink interface; that the beam failure of the terminal occurs on some of the one or more target objects of the sidelink interface, and beam failure recovery performed by the terminal using a target object other than the some of the one or more target objects fails.

Optionally, the processor is used to read the computer program and perform following operations: determining, under a second condition, that the radio link failure of the terminal occurs on the one or more target objects; wherein the second condition including at least one or more of: that a number of retransmissions indicated by a sidelink (SL) radio link control (RLC) entity on the one or more target objects reaches a maximum number of retransmissions; a T400 timer corresponding to a target address or the one or more target objects expires; that a hybrid automatic repeat request (HARQ) discontinuous transmission (DTX) count received by the terminal reaches a maximum value, wherein the HARQ DTX count is a continuous HARQ DTX count for the one or more target objects or for a target address; that an integrity check of a packet data convergence protocol (PDCP) entity corresponding to an SL signaling radio bearer (SRB) of a target address fails, wherein the SL SRB includes SL-SRB 2 and SL-SRB 3.

Optionally, the processor is used to read the computer program and perform following operations: if the terminal is in a radio resource control (RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the processor is used to read the computer program and perform following operations: if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

Optionally, the first message includes at least one or more of: that the beam failure occurs in the terminal; a target object identifier of a target object on which the beam failure occurs in the terminal.

Optionally, the processor is used to read the computer program and perform following operations: receiving a third message from the network device, wherein the third message carries information of a first target object, the first target object is used to assist with beam failure recovery of the one or more target objects; performing beam failure recovery of the sidelink interface using the first target object.

A network device is provided in the embodiments of the present disclosure. The network device includes: a memory, a transceiver, and a processor, wherein the memory is used to store a computer program; the transceiver is used to receive and send data under control of the processor; and the processor is used to read the computer program and perform following operations: receiving a first message from a terminal, wherein the first message is used to indicate that a beam failure occurs in a sidelink interface of the terminal; and/or receiving a second message from the terminal, wherein the second message is used to indicate that a radio link failure on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the first message includes at least one or more of: that the beam failure occurs in the terminal; a target object identifier of a target object on which the beam failure occurs in the terminal.

Optionally, the processor is used to read the computer program and perform at least one or more of: deactivating or de-configuring a target object on which the beam failure of the terminal occurs; sending a third message to the terminal, wherein the third message carries information of a first target object, the first target object is used to assist with beam failure recovery of the one or more target objects.

A beam failure processing apparatus is provided in the embodiments of the present disclosure. The apparatus includes: a first processing unit, used to when a beam failure occurs on one or more target objects of a sidelink interface, perform following operations: determining that a radio link failure occurs in the sidelink interface of the terminal; or sending a first message to a network device, wherein the first message is used to indicate that a beam failure occurs in the sidelink interface of the terminal; or performing beam failure recovery on at least one target object other than the one or more target objects; wherein the one or more target objects include a sidelink interface carrier or a bandwidth part (BWP).

A beam failure processing apparatus is provided in the embodiments of the present disclosure. The apparatus includes: a first receiving unit, used to receive a first message from a terminal, wherein the first message is used to indicate that a beam failure occurs in a sidelink interface of the terminal; and/or receive a second message from the terminal, wherein the second message is used to indicate that a radio link failure on the sidelink interface of the terminal.

A processor-readable storage medium storing a computer program is provided in the embodiments of the present disclosure, wherein the computer program, when executed by a processor, implements the steps of the beam failure processing methods according the above.

The above technical solution of the present disclosure has the following beneficial effects.

Embodiments of the present disclosure provide a processing method for a terminal when a beam failure occurs in a target object of a sidelink interface, which can solve the problem that the terminal cannot determine the processing mode after the beam failure of the sidelink interface.

### BRIEF DESCRIPTION OF THE DRAWINGS

FIG. 1 is a schematic structural diagram of cellular network communication;
FIG. 2 is a schematic structural diagram of a sidelink communication network;
FIG. 3 is a schematic flowchart of a beam failure processing method according to an embodiment of the present disclosure;
FIG. 4 is a second schematic flowchart of a beam failure processing method according to an embodiment of the present disclosure;
FIG. 5 is a third schematic flowchart of a beam failure processing method according to an embodiment of the present disclosure;
FIG. 6 is a fourth schematic flowchart of a beam failure processing method according to an embodiment of the present disclosure;
FIG. 7 is a first schematic structural diagram of a beam failure processing apparatus according to an embodiment of the present disclosure;
FIG. 8 is a second schematic structural diagram of a beam failure processing apparatus according to an embodiment of the present disclosure;
FIG. 9 is a schematic structural diagram of a terminal according to an embodiment of the present disclosure;
FIG. 10 is a schematic structural diagram of a network device according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments. In the following description, specific details such as specific configurations and components are provided merely to facilitate a thorough understanding of embodiments of the present disclosure. Therefore, those skilled in the art should understand that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present disclosure, it should be understood that the sequence numbers of the processes described below do not imply a sequence of execution sequences, and the execution order of the processes should be determined by its functions and internal logic, and should not constitute any limitation on the implementation processes of the embodiments of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

When performing the description of the embodiments of the present disclosure, some concepts used in the following description are first explained.

### (1) Cellular Network Communication

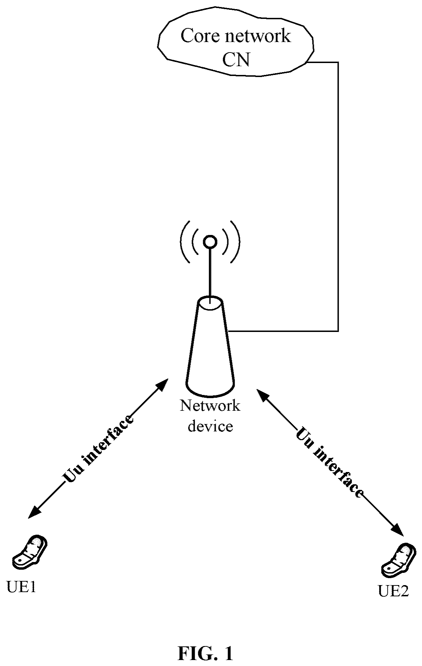

Traditional wireless communication adopts a cellular network communication mode, that is, the terminal and the network device perform uplink/downlink data/control information transmission through the Uu interface, as shown in FIG. 1.

### (2) Direct Communication

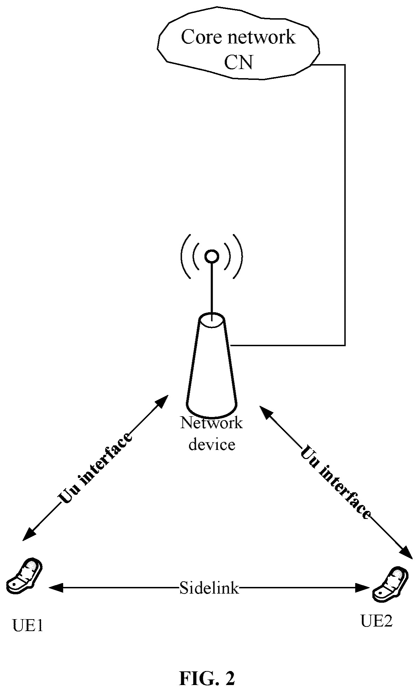

Direct communication refers to a manner in which a neighboring terminal may perform data transmission through a direct communication link (also referred to as a sidelink or a PC5 or a bypass) within a short distance range. The radio interface corresponding to the Sidelink link is referred to as a sidelink interface (also referred to as a Sidelink interface or a PC5 interface or a bypass interface), as shown in FIG. 2.

Embodiments of the present disclosure provide a beam failure processing method and apparatus, a terminal, and a network device, to resolve a problem that a terminal cannot determine a processing mode after a beam failure of a sidelink interface.

The method and the apparatus are based on the same application concept, and because the method and the apparatus solve a similar principle of a problem, the implementation of the apparatus and the method may refer to each other, and details are not described herein again.

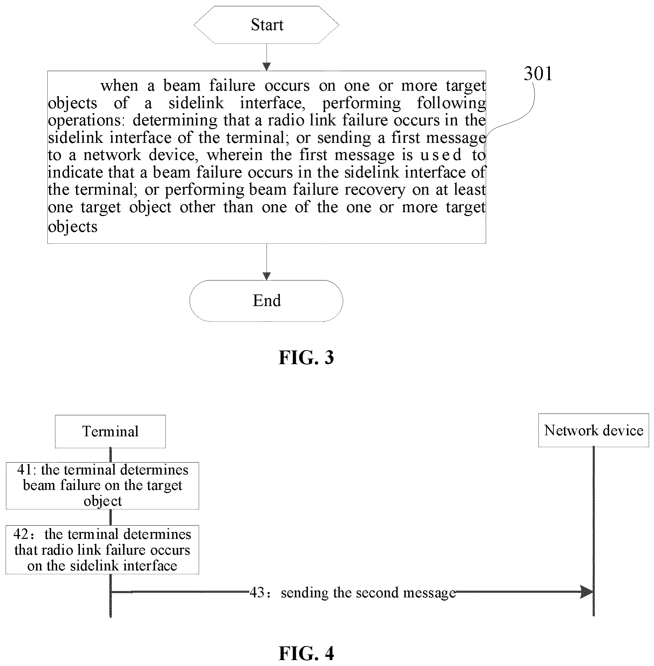

As shown in FIG. 3, an embodiment of the present disclosure provides a beam failure processing method, which is applied to a terminal, and specifically includes the following steps:
Step 301: when a beam failure occurs on one or more target objects of a sidelink interface, performing the following operations:
(1) determining that a radio link failure occurs in a sidelink interface of a terminal; or
(2) sending a first message to a network device, wherein the first message is used to indicate that a beam failure occurs in the sidelink interface of the terminal; or
(3) performing beam failure recovery on at least one target object other than the one or more target objects;
wherein the one or more target objects include a sidelink interface carrier or a bandwidth part (BWP).

In this embodiment, in a case that beam failure of the terminal occurs on one or more target objects of the sidelink interface, the terminal may perform the following operations: determining that radio link failure of the terminal occurs on the sidelink interface; or the terminal indicates to the network device that a beam failure occurs in the sidelink interface; or, the terminal performs beam failure recovery on at least one target beam other than the target object with the beam failure. The target object may be a sidelink interface carrier or a BWP, for example, when a beam failure occurs on at least one BWP of the sidelink interface, the terminal performs beam failure recovery on at least one BWP other than the BWP where the beam failure occurs.

Embodiments of the present disclosure provide a processing method for a terminal when a beam failure occurs in a target object of a sidelink interface, which can solve the problem that the terminal cannot determine the processing mode after the beam failure of the sidelink interface occurs.

In an optional embodiment, in a case that beam failure occurs on one or more target objects of the sidelink interface, determining that a radio link failure occurs in the sidelink interface by the terminal includes: if a number of target objects used by the terminal in the sidelink interface is one or a number of target objects in an active state is one, and the beam failure of the terminal occurs on the one target object, determining that the radio link failure of the terminal occurs in the sidelink interface.

In this embodiment, if there is only one target object used by the terminal in the current sidelink interface, or there is only one target object in the active state of the current sidelink interface, the terminal determines that the radio link failure of the terminal on the sidelink interface occurs when the beam failure occurs in the target object.

In an optional embodiment, in a case that beam failure occurs on one or more target objects of a sidelink interface, beam failure recovery is performed on one or more target objects other than the target object, and the method further includes: if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

In this embodiment, if there are a plurality of target objects used by the terminal in the current sidelink interface (that is, the number of the used target objects is greater than one), or there are a plurality of target objects (that is, the number of the target objects in the active state is greater than one) in the active state of the current sidelink interface, it can be determined that the radio link failure of the terminal in the sidelink interface can be determined when the first condition is met.

Optionally, the first condition includes at least one or more of the following:
1. that the beam failure of the terminal occurs on all of the one or more target objects of the sidelink interface; in this case, when the number of the target objects used by the terminal in the sidelink interface is greater than 1 or the number of the target objects in the active state is greater than 1, the terminal can determine that radio link failure of the terminal occurs on the sidelink interface only when the beam failure occurs in all the target objects of the sidelink interface;
2. that the beam failure of the terminal occurs on some of the one or more target objects of the sidelink interface, and the radio link failure occurs on a target object other than the some of the one or more target objects in the sidelink interface; in this case, when the number of the target objects used by the terminal in the sidelink interface is greater than 1 or the number of the target objects in the active state is greater than 1, beam failure of the terminal occurs on a part of the target objects and when a radio link failure occurs on a target object other than the part of the target objects, it may be determined that the radio link failure of the terminal on the sidelink interface occurs;
3. that the beam failure of the terminal occurs on some of the one or more target objects of the sidelink interface, and beam failure recovery performed by the terminal using a target object other than the some of the one or more target objects fails; in this case, when the number of the target objects used by the terminal in the sidelink interface is greater than 1 or the number of the target objects in the active state is greater than 1, beam failure of the terminal occurs on a part of the target objects, and the terminal performs beam failure recovery on target objects other than the part of the target objects, and if the beam failure recovery fails, it may be determined that radio link failure of the terminal occurs on the sidelink interface.

Optionally, the method further includes: determining, under a second condition, that the radio link failure of the terminal occurs on the one or more target objects; wherein the second condition including at least one or more of:
1) the number of retransmissions indicated by a sidelink (SL) radio link control (RLC) entity on the one or more target objects reaches a maximum number of retransmissions; when the SL RLC entity indicates the maximum number of retransmissions on the target object, the terminal determines that a beam failure occurs on the target object;
2) a T400 timer corresponding to a target address or the one or more target objects expires; when T400 corresponding to the target address or the target object expires, it is determined that a beam failure occurs on the target object; the target address is an address of a communication peer of the terminal;
3) that a hybrid automatic repeat request (HARQ) discontinuous transmission (DTX) count received by the terminal reaches a maximum value, wherein the HARQ DTX count is a continuous HARQ DTX count for the one or more target objects or for a target address; optionally, the terminal determines, from the Medium Access Control (MAC) layer, that the number of consecutive HARQ DTX times for the target object or the target address reaches a maximum number of times, to determine that a beam failure of the terminal occurs on the target object;
4) that an integrity check of a packet data convergence protocol (PDCP) entity corresponding to an SL signaling radio bearer (SRB) of a target address fails, wherein SL SRBs includes SL-SRB 2 and SL-SRB 3; where SL SRBs include the SL-SRB2 and the SL-SRB3, and if the integrity check of the PDCP entity corresponding to the SL-SRB2 or the SL-SRB3 for the specific target address fails, it may be determined that a beam failure of the terminal occurs on the target object.

In an optional embodiment, when determining that the radio link failure occurs in the sidelink interface of the terminal, the method further includes:
if the terminal is in a radio resource control (RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

In this embodiment, when the terminal determines that the radio link failure occurs in the sidelink interface, if the terminal is in the RRC connected state or if the terminal is in the RRC connected state and the sidelink interface uses the resource allocation mode scheduled by the network, the terminal reports the second message to the network device, where the second message is used to indicate that radio link failure occurs on the sidelink interface.

Optionally, the second message includes at least one or more of the following information: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

When a beam failure occurs on one or more target objects of the sidelink interface of the terminal, it is determined that radio link failure of the terminal occurs on the sidelink interface, or when the terminal performs beam failure recovery on at least one target object other than the one or more target objects, the beam failure processing process is shown in FIG. 4, including following steps.

Step 41: the terminal performs beam failure judgment on the target object.

The operation process of performing beam failure judgment on the target object by the terminal is performed in the MAC layer, and for a target object, the MAC layer is implemented based on a beam failure instance indication and a beam failure indication counter (BFI_Counter) received from the lower layer (the physical layer).

The specific process is as follows.

If the initial value of the BFI_COUNTER set by the terminal is 0, the terminal receives a beam failure instance indication from the lower layer, the beam failure detection timer (beamFailureDetectionTimer) is started/restarted, and the value of the BFI_COUNTER is increased by one. If the beamFailureDetectionTimer expires, then the value of the BFI_COUNTER is set to 0; if the BFI_COUNTER reaches the preset value (the preset value is the maximum value of the beam failure instance configured by the network), it is determined that the beam failure of the UE occurs on the target object.

The target object may be a sidelink interface carrier or a BWP.

Step 42: the terminal determines that a radio link failure occurs in the sidelink interface.

Specifically, if there is only one target object used by the terminal in the current sidelink interface or being in the active state, and the beam failure occurs in the target object, it is determined that radio link failure occurs on the sidelink interface.

If the number of the target objects currently used by the current sidelink interface of the terminal or the number of the target object in the active state is more than one, it is determined that the radio link failure of the terminal occurs in the sidelink interface when the first condition is met.

The first condition includes at least one or more of following: that the beam failure of the terminal occurs on all of the one or more target objects of the sidelink interface; that the beam failure of the terminal occurs on some of the one or more target objects of the sidelink interface, and the radio link failure occurs on a target object other than the some of the one or more target objects in the sidelink interface; that the beam failure of the terminal occurs on some of the one or more target objects of the sidelink interface, and beam failure recovery performed by the terminal using a target object other than the some of the one or more target objects fails

For the first condition, the terminal determines, under a second condition, that the radio link failure of the terminal occurs on the one or more target objects; wherein the second condition includes at least one or more of: that a number of retransmissions indicated by a sidelink (SL) radio link control (RLC) entity on the one or more target objects reaches a maximum number of retransmissions; a T400 timer corresponding to a target address or the one or more target objects expires; that a continuous HARQ DTX count for the one or more target objects or for a target address received from the MAC layer reaches a maximum value; that an integrity check of a PDCP entity corresponding to an SL SRB-2 or an SL-SRB3 of a specific target address fails.

Optionally, step 43: the terminal sends the second message to the network device serving the terminal.

If the terminal is in the RRC connected state or if the terminal is in the RRC connected state and the sidelink interface uses the resource allocation mode scheduled by the network, then the terminal reports a second message to the network device, where the second message is used to indicate that radio link failure of the terminal occurs on the sidelink interface. The specific second message may reuse the SL terminal information (Sidelink UE Information) in the related art, or a new RRC message or a MAC control element (MAC Control Element, MAC CE) or physical layer signaling may be introduced.

Optionally, the second message may further carry one or more of the following information: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

A failure reason corresponding to each target object in which a radio link failure occurs in the terminal may include one or more of the following: that the SL RLC entity indicates on the target object that a maximum number of retransmissions reaches; that T400 corresponding to a target object or the target object expires; that the times of the continuous HARQ DTX for the target object or the target address and received from the MAC layer reach the maximum value; that an integrity check of a PDCP entity corresponding to the SL-SRB 2 or the SL-SRB3 for a specific target address fails.

In an optional embodiment, when a beam failure occurs on one or more target objects of a sidelink interface, a first message is sent to a network device, where the first message indicates that a beam failure of a terminal occurs in a sidelink interface, that the first message indicates that a beam failure occurs in a terminal, includes: if the terminal is in a radio resource control (RRC) connected state, or the terminal is in an RRC connected state and a resource allocation mode scheduled by a network is used in the sidelink interface, sending a first message to the network device in a case that beam failure occurs on one or more target objects of the sidelink interface, wherein the first message is used to indicate that beam failure occurs on the sidelink interface of the terminal.

In this embodiment, when the beam failure occurs on one or more target objects of a sidelink interface, if the terminal is in the RRC connected state or if the terminal is in the RRC connected state and a resource allocation mode scheduled by the network is used in the sidelink interface, then the terminal may report the first message to the network device, the first message is used to indicate that beam failure occurs on the sidelink interface of the terminal.

Optionally, the first message includes at least one or more of the following information: that a beam failure occurs in the terminal; a target object identifier of a target object on which the beam failure of the terminal occurs.

In an optional embodiment, the method further includes: receiving a third message from the network device, wherein the third message carries information of a first target object, the first target object is used to assist with beam failure recovery of the one or more target objects; performing beam failure recovery of the sidelink interface using the first target object.

In this embodiment, after the terminal sends the first message to the network device, the network device may deactivate or de-configure the target object in which the beam failure occurs for the sidelink interface; and/or, the network device indicates, to the terminal, the first target object assisting the target object in which the beam failure occurs to perform beam failure recovery. Optionally, the network device may send the third message to the terminal, and indicate the information of the first target object by using the third message. The terminal may perform beam failure recovery of the sidelink interface by using the first target object indicated by the network device and used to assist the target object in performing beam failure recovery.

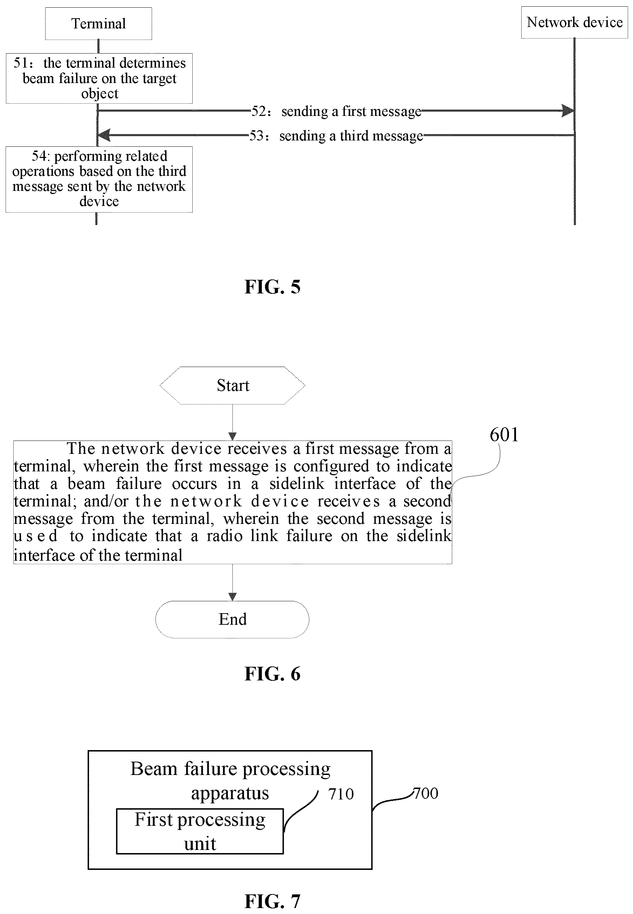

In a case that beam failure occurs on one or more target objects of the sidelink interface by the terminal, sending the first message to the network device to indicate that the beam failure of the terminal occurs in the sidelink interface, as shown in FIG. 5, includes following steps.

Step 51: the terminal performs beam failure judgment on the target object.

The operation process of performing beam failure judgment on the target object by the terminal is performed in the MAC layer, and for a target object, the MAC layer is implemented based on a beam failure instance indication and a beam failure indication counter (BFI_COUNTER) received from the lower layer (the physical layer).

The specific process is as follows.

If the initial value of the BFI_COUNTER set by the terminal is 0, the terminal receives a beam failure instance indication from the lower layer, the beam failure detection timer (beamFailureDetectionTimer) is started/restarted, and the value of the BFI_COUNTER is increased by one. If the beamFailureDetectionTimer expires, then the value of the BFI_COUNTER is set to 0; if the BFI_COUNTER reaches the preset value (the preset value is the maximum value of the beam failure instance configured by the network), it is determined that the beam failure of the UE occurs on the target object.

The target object may be a sidelink interface carrier or a BWP.

Step 52: the terminal sends the first message to the network device.

If the terminal is in the RRC connected state or if the terminal is in the RRC connected state and uses the resource allocation mode scheduled by the network device, the terminal indicates to the network device that the beam failure occurs in the terminal when the beam failure occurs in the one or more target objects of the sidelink interface of the terminal. Specifically, the terminal reports the first message to the network device, where the first message is used to indicate that beam failure occurs on the sidelink interface of the terminal.

Optionally, the first message may further carry one or more of the following information: a beam failure occurs in the terminal; a target object identifier of a beam failure occurring in the terminal.

Step 53: the network device sends a third message to the terminal.

The network device receives the first information, and may perform at least one of the following operations: deactivating or de-configuring the target object for a sidelink interface; and indicating, to the terminal, the first target object that assists the target object in performing beam failure recovery; and sending a third message to the terminal by the network device to instruct the terminal to perform the foregoing operations.

Step 54: the terminal performs a related operation based on the third message sent by the network device.

If the network device indicates, by using the third message, the first target object that assists the target object in performing beam failure recovery, the terminal uses the first target object to perform beam failure recovery of the sidelink interface.

If the network device indicates to deactivate or de-configure the target object for the sidelink interface through the third message, the terminal deactivates or de-configures the target object.

Embodiments of the present disclosure provide a processing method for a terminal when a beam failure occurs in a target object of a sidelink interface, which can solve the problem that the terminal cannot determine the processing mode after the beam failure of the sidelink interface occurs.

As shown in FIG. 6, an embodiment of the present disclosure further provides a beam failure processing method, applied to a network device and including:
Step 601: receiving a first message from a terminal by the network device, wherein the first message is used to indicate that a beam failure occurs in a sidelink interface of the terminal; and/or receiving a second message from the terminal by the network device, wherein the second message is used to indicate that a radio link failure on the sidelink interface of the terminal.

In this embodiment, when a beam failure occurs on one or more target objects of the sidelink interface of the terminal, the terminal may send a first message to the network device, where the first message is used to indicate that a beam failure occurs in the sidelink interface of the terminal; and/or, when the beam failure occurs on one or more target objects of the sidelink interface of the terminal, it may be determined that beam failure occurs on the sidelink interface of the terminal, and/or the terminal performs beam failure recovery on at least one target object other than the one or more target objects, and if the beam failure recovery fails, it is determined that radio link failure occurs on the sidelink interface of the terminal. When it is determined that radio link failure occurs on the sidelink interface of the terminal, if the terminal is in the radio resource control RRC connected state, or the terminal is in the RRC connected state and the sidelink interface uses the resource allocation mode scheduled by the network, a second message is sent to the network device, where the second message indicates that radio link failure of the terminal occurs on the sidelink interface. The target object includes a sidelink interface carrier or a BWP.

Optionally, the first message includes at least one or more of: that the beam failure occurs in the terminal; a target object identifier of a target object on which the beam failure occurs in the terminal.

Optionally, the second message includes at least one or more of the following information:
that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, after receiving the first message sent by the terminal, the method further includes at least one or more of the following: deactivating or de-configuring a target object on which the beam failure of the terminal occurs; sending a third message to the terminal, wherein the third message carries information of a first target object, the first target object is used to assist with beam failure recovery of the one or more target objects.

In this embodiment, after the terminal sends the first message to the network device, the network device may de-activate or de-configure the target object in which the beam failure occurs in the sidelink interface; and/or, the network device indicates, to the terminal, the first target object assisting the target object in which the beam failure occurs to perform beam failure recovery. Optionally, the network device may send the third message to the terminal, and indicate the information of the first target object by using the third message. The terminal may perform beam failure recovery of the sidelink interface by using the first target object indicated by the network device and used to assist the target object in performing beam failure recovery.

Embodiments of the present disclosure provide a processing method when a beam failure occurs in a target object of a sidelink interface of the terminal, and the network device may configure an operation for a beam failure and/or a radio link failure of the terminal by receiving a first message sent by the terminal on the target object of the sidelink interface and/or receiving a second message sent by the terminal when the radio link fails on the sidelink interface.

The foregoing embodiments describe the beam failure processing method of the present disclosure, and the following embodiments will be further described with reference to the accompanying drawings.

Specifically, as shown in FIG. 7, an embodiment of the present disclosure provides a beam failure processing apparatus 700, applied to a terminal and including: a first processing unit 710, used to perform the following operations in a case that beam failure occurs on one or more target objects of a sidelink interface:
determining that a radio link failure occurs in the sidelink interface of the terminal; or sending a first message to a network device, wherein the first message is used to indicate that a beam failure occurs in the sidelink interface of the terminal; or performing beam failure recovery on at least one target object other than the one or more target objects; wherein the one or more target objects include a sidelink interface carrier or a bandwidth part (BWP).

Optionally, the first processing unit is specifically used to: if a number of target objects used by the terminal in the sidelink interface is one or a number of target objects in an active state is one, and the beam failure of the terminal occurs on the one target object, determine that the radio link failure of the terminal occurs in the sidelink interface.

Optionally, the apparatus further includes a first determining unit, used to: if the number of target objects used by the terminal in the sidelink interface is greater than one or the number of target objects in an active state is greater than one, and the beam failure of the terminal occurs in the one or more target objects, determine that the radio link failure of the terminal occurs in the sidelink interface when a first condition is met.

Optionally, the first condition includes at least one or more of the following: that the beam failure of the terminal occurs on all of the one or more target objects of the sidelink interface; that the beam failure of the terminal occurs on some of the one or more target objects of the sidelink interface, and the radio link failure occurs on a target object other than the some of the one or more target objects in the sidelink interface; that the beam failure of the terminal occurs on some of the one or more target objects of the sidelink interface, and beam failure recovery performed by the terminal using a target object other than the some of the one or more target objects fails.

Optionally, the apparatus further includes a second determining unit, used to determine, under a second condition, that the radio link failure of the terminal occurs on the one or more target objects; wherein the second condition includes at least one or more of: that a number of retransmissions indicated by a sidelink (SL) radio link control (RLC) entity on the one or more target objects reaches a maximum number of retransmissions; that a T400 timer corresponding to a target address or the one or more target objects expires; that a hybrid automatic repeat request (HARQ) discontinuous transmission (DTX) count received by the terminal reaches a maximum value, wherein the HARQ DTX count is a continuous HARQ DTX count for the one or more target objects or for a target address; that an integrity check of a packet data convergence protocol (PDCP) entity corresponding to an SL signaling radio bearer (SRB) of a target address fails, wherein the SL SRB includes SL-SRB 2 and SL-SRB 3.

Optionally, when determining that the radio link failure occurs in the sidelink interface of the terminal, the apparatus further includes a first sending unit, used to, if the terminal is in a radio resource control (RRC) connected state, or the terminal is in an RRC connected state and a resource allocation mode scheduled by a network is used in the sidelink interface, send a second message to the network device, wherein the second message indicates that the radio link failure occurs on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the first processing unit is specifically used to: if the terminal is in an RRC connected state, or the terminal is in an RRC connected state and a resource allocation mode scheduled by a network is used in the sidelink interface, send the first message to the network device when the beam failure occurs on the one or more target objects of the sidelink interface, wherein the first message is used to indicate that the beam failure occurs in the sidelink interface of the terminal.

Optionally, the first message includes at least one or more of: that the beam failure occurs in the terminal; a target object identifier of a target object on which the beam failure occurs in the terminal.

Optionally, the apparatus further includes a second receiving unit, used to receive a third message from the network device, wherein the third message carries information of a first target object, the first target object is used to assist with beam failure recovery of the one or more target objects; and a second processing unit, used to perform sidelink interface beam failure recovery by using the first target object.

It should be noted that the above-mentioned apparatus provided in the embodiments of the present disclosure can implement all method steps implemented by the above method embodiments applied to the terminal, and can achieve the same technical effect, which will not be specifically described in detail in the same parts and beneficial effects of the method embodiments in this embodiment.

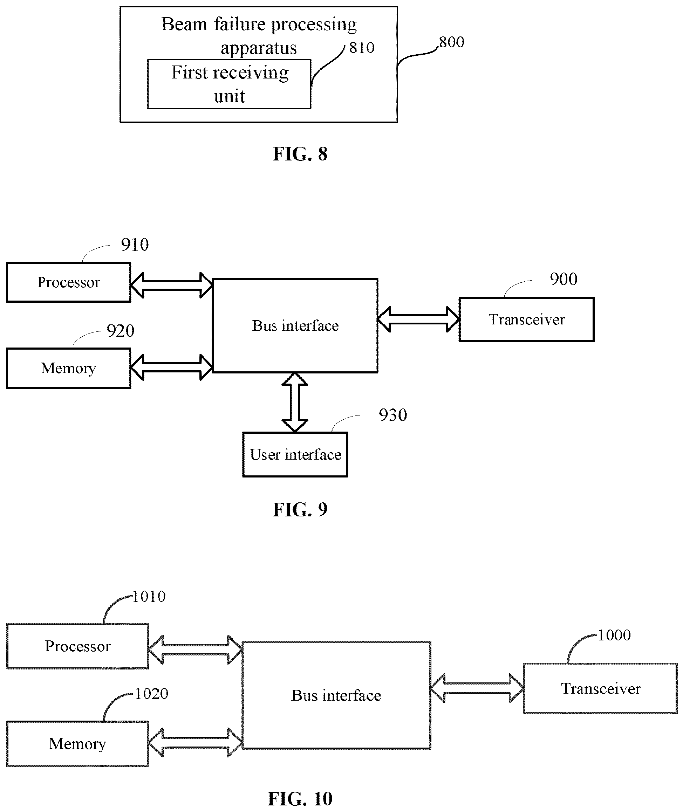

Specifically, as shown in FIG. 8, an embodiment of the present disclosure provides a beam failure processing apparatus 800, applied to a network device and including a first receiving unit 810, used to receive a first message from a terminal, wherein the first message is used to indicate that a beam failure occurs in a sidelink interface of the terminal; and/or receive a second message from the terminal, wherein the second message is used to indicate that a radio link failure on the sidelink interface of the terminal; and the target object includes a sidelink interface carrier or a BWP.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the first message includes at least one or more of: that the beam failure occurs in the terminal; a target object identifier of a target object on which the beam failure occurs in the terminal.

Optionally, the apparatus further includes a third processing unit, where the third processing unit is used to perform at least one of the following operations:
deactivating or de-configuring a target object on which the beam failure of the terminal occurs; sending a third message to the terminal, wherein the third message carries information of a first target object, the first target object is used to assist with beam failure recovery of the one or more target objects.

It should be noted that, the foregoing apparatus provided in the embodiments of the present disclosure can implement all method steps implemented by the foregoing method embodiments applied to a network device, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program codes, such as a USB flash drive, a removable hard disk, a read-only memory (ROM), a random access memory (RAM), a magnetic disk, or an optical disk.

As shown in FIG. 9, an embodiment of the present disclosure further provides a terminal, including: a memory 920, a transceiver 900, and a processor 910, wherein the memory 920 is used to store a computer program; the transceiver 900 is used to receive and send data under the control of the processor 910; and the processor 910 is used to read the computer program in the memory and perform the following operations: when a beam failure occurs on one or more target objects of a sidelink interface, performing following operations:
determining that a radio link failure occurs in the sidelink interface of the terminal; or
sending a first message to a network device, wherein the first message is used to indicate that a beam failure occurs in the sidelink interface of the terminal; or performing beam failure recovery on at least one target object other than the one or more target objects;
wherein the one or more target objects include a sidelink interface carrier or a bandwidth part (BWP).

Optionally, the processor is used to read the computer program in the memory and perform the following operations: if the number of target objects used by the terminal in the sidelink interface is one or the number of target objects in an active state is one, and the beam failure of the terminal occurs on the one target object, determining that the radio link failure of the terminal occurs in the sidelink interface.

Optionally, the processor is used to read the computer program in the memory and perform the following operations: if the number of target objects used by the terminal in the sidelink interface is greater than one or the number of target objects in an active state is greater than one, and the beam failure of the terminal occurs in the one or more target objects, determining that the radio link failure of the terminal occurs in the sidelink interface when a first condition is met.

Optionally, the first condition includes at least one or more of following: that the beam failure of the terminal occurs on all of the one or more target objects of the sidelink interface; that the beam failure of the terminal occurs on some of the one or more target objects of the sidelink interface, and the radio link failure occurs on a target object other than the some of the one or more target objects in the sidelink interface; that the beam failure of the terminal occurs on some of the one or more target objects of the sidelink interface, and beam failure recovery performed by the terminal using a target object other than the some of the one or more target objects fails.

Optionally, the processor is used to read the computer program in the memory and perform the following operations: determining, under a second condition, that the radio link failure of the terminal occurs on the one or more target objects; wherein the second condition includes at least one or more of: that the number of retransmissions indicated by a sidelink (SL) radio link control (RLC) entity on the one or more target objects reaches a maximum number of retransmissions; a T400 timer corresponding to a target address or the one or more target objects expires; that a hybrid automatic repeat request (HARQ) discontinuous transmission (DTX) count received by the terminal reaches a maximum value, wherein the HARQ DTX count is a continuous HARQ DTX count for the one or more target objects or for a target address; that an integrity check of a packet data convergence protocol (PDCP) entity corresponding to an SL signaling radio bearer (SRB) of a target address fails, wherein the SL SRB includes SL-SRB 2 and SL-SRB 3.

Optionally, the processor is used to read the computer program in the memory and perform the following operations: if the terminal is in a radio resource control (RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

Optionally, the second message includes at least one or more of: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the processor is used to read the computer program in the memory and perform the following operations: if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

Optionally, the first message includes at least one or more of the following information: that the beam failure occurs in the terminal; a target object identifier of a target object on which the beam failure occurs in the terminal.

Optionally, the processor is used to read the computer program in the memory and perform the following operations: receiving a third message from the network device, wherein the third message carries information of a first target object, the first target object is used to assist with beam failure recovery of the one or more target objects; performing beam failure recovery of the sidelink interface using the first target object.

In FIG. 9, the bus architecture may include any number of interconnected buses and bridges, and specifically, various circuits of one or more processors represented by the processor 910 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 900 may be a plurality of elements, that is, includes a transmitter and a transceiver, and provides units for communicating with various other apparatuses on a transmission medium. For different user equipment, the user interface 930 may also be an interface capable of being externally connected to a device needing to be internally connected, and the connected device includes but is not limited to a keypad, a display, a speaker, a microphone, a joystick, and the like.

The processor 910 is responsible for managing the bus architecture and general processing, and the memory 920 may store data used by the processor 910 when performing operations.

Optionally, the processor 910 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is used to perform any one of the methods provided in the embodiments of the present disclosure according to the obtained executable instruction. The processor and the memory may also be physically separated.

It should be noted that the above-mentioned apparatus provided in the embodiments of the present disclosure can implement all method steps implemented by the above method embodiments applied to the terminal, and can achieve the same technical effect, which will not be specifically described in detail in the same parts and beneficial effects of the method embodiments in this embodiment.

As shown in FIG. 10, an embodiment of the present disclosure further provides a network device, including: a memory 1020, a transceiver 1000, and a processor 1010, wherein the memory 1020 is used to store a computer program; the transceiver 1000 is used to receive and send data under the control of the processor 1010; and the processor 1010 is used to read the computer program in the memory and perform the following operations: receiving a first message from a terminal, wherein the first message is used to indicate that a beam failure occurs in a sidelink interface of the terminal; and/or receiving a second message from the terminal, wherein the second message is used to indicate that a radio link failure on the sidelink interface of the terminal.

Optionally, the second message includes at least one or more of the following information: that a beam failure occurs in the terminal; a target object identifier of a target object on which the beam failure of the terminal occurs; a target object identifier of a target object on which the radio link failure of the terminal occurs; a failure reason corresponding to each target object in which the radio link failure of the terminal occurs.

Optionally, the first message includes at least one or more of: that the beam failure occurs in the terminal; a target object identifier of a target object on which the beam failure occurs in the terminal.

Optionally, the processor is used to read a computer program in the memory and perform at least one or more of the following operations: deactivating or de-configuring a target object on which the beam failure of the terminal occurs; sending a third message to the terminal, wherein the third message carries information of a first target object, the first target object is used to assist with beam failure recovery of the one or more target objects.

In FIG. 10, the bus architecture may include any number of interconnected buses and bridges, and specifically, various circuits of one or more processors represented by the processor 1010 and a memory represented by the memory 1020 are linked together. The bus architecture may also link various other circuits, such as a peripheral device, a voltage regulator, and a power management circuit, which are well known in the art, and therefore are not further described herein. The bus interface provides an interface. The transceiver 1000 may be a plurality of elements, that is, includes a transmitter and a transceiver, and provides units for communicating with various other apparatuses on a transmission medium. The processor 1010 is responsible for managing the bus architecture and general processing, and the memory 1020 may store data used by the processor 1010 when performing operations.

The processor 1010 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the foregoing apparatus provided in the embodiments of the present disclosure can implement all method steps implemented by the foregoing method embodiments applied to a network device, and can achieve the same technical effect, and details of the same parts and beneficial effects as those in the method embodiments in this embodiment are not described herein again.

In addition, an embodiment of the present disclosure further provides a processor-readable storage medium, on which a computer program is stored, wherein when the program is executed by a processor, the steps of the beam failure processing method are implemented, and the same technical effect can be achieved. The readable storage medium may be any usable medium or data storage device accessible by a processor, including but not limited to a magnetic memory (for example, a floppy disk, a hard disk, a magnetic tape, a magneto-optical disk (MO), and the like), an optical storage (such as a Compact Disk (CD) a Digital Versatile Disc (DVD), a Blu-ray disk (BD), a high-definition versatile disc (HVD), and the like), and a semiconductor storage (such as ROM, an Erasable Programmable Read-Only Memory (EPROM), an Electrically Erasable Programmable Read Only Memory (EEPROM), a non-volatile memory (NAND Flash), a Solid State Disk (SSD)), and the like.

It should be noted that the technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a general packet radio service (GPRS) system, a Long Term Evolution (LTE) system, a LTE frequency division duplex (FDD) system, a LTE time division duplex (TDD) system, a Long Term Evolution Advanced (LTE-A) system, a Universal Mobile Telecommunication System (UMTS), a Worldwide Interoperability for Microwave Access (WiMAX) system, a 5G new radio (NR) system, and the like. The plurality of systems each include a terminal device and a network device. The system may further include a core network part, for example, an Evolved Packet System (EPS), a 5G system (5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be used to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or a Node B in a Wide-band Code Division Multiplex Access (WCDMA) system, or may be an evolutional Node B, eNB or e-NodeB in a Long Term Evolution (LTE) system, or may be a 5G base station in a next generation system, a relay node, a home base station (Femto), a pico base station (Pico), or the like, which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be a two-dimensional MIMO antenna (2D-MIMO), a three-dimensional MIMO antenna (3D-MIMO), a full dimension MIMO antenna (full dimension, FD-MIMO) or a super-large-scale MIMO antenna (Massive-MIMO), or may be diversity transmission or precoding transmission or beamforming transmission, according to the form and number of the root antenna combination.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A beam failure processing method applied to a terminal, the method comprising:
when a beam failure occurs on one or more target objects of a sidelink interface, performing following operations:
determining that a radio link failure occurs in the sidelink interface of the terminal; or
sending a first message to a network device, wherein the first message is used to indicate that a beam failure occurs in the sidelink interface of the terminal; or
performing beam failure recovery on at least one target object other than the one or more target objects;
wherein the one or more target objects comprise a sidelink interface carrier or a bandwidth part (BWP).

2. The method according to claim 1, wherein when the beam failure occurs on the one or more target objects of the sidelink interface, determining that the radio link failure occurs in the sidelink interface by the terminal comprises:
if a number of target objects used by the terminal in the sidelink interface is one or a number of target objects in an active state is one, and the beam failure of the terminal occurs on the one target object, determining that the radio link failure of the terminal occurs in the sidelink interface.

3. The method according to claim 1, wherein when the beam failure occurs on the one or more target objects of the sidelink interface, performing the beam failure recovery on the at least one target object other than the one or more target objects, the method further comprises:
if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

4. The method according to claim 3, wherein the first condition comprises at least one or more of following:
that the beam failure of the terminal occurs on all of the one or more target objects of the sidelink interface;
that the beam failure of the terminal occurs on some of the one or more target objects of the sidelink interface, and the radio link failure occurs on a target object other than the some of the one or more target objects in the sidelink interface;
that the beam failure of the terminal occurs on some of the one or more target objects of the sidelink interface, and beam failure recovery performed by the terminal using a target object other than the some of the one or more target objects fails.

5. The method according to claim 1 or 4, further comprising:
determining, under a second condition, that the radio link failure of the terminal occurs on the one or more target objects;
wherein the second condition comprises at least one or more of:
that a number of retransmissions indicated by a sidelink (SL) radio link control (RLC) entity on the one or more target objects reaches a maximum number of retransmissions;
a T400 timer corresponding to a target address or the one or more target objects expires;
that a hybrid automatic repeat request (HARQ) discontinuous transmission (DTX) count received by the terminal reaches a maximum value, wherein the HARQ DTX count is a continuous HARQ DTX count for the one or more target objects or for a target address;
that an integrity check of a packet data convergence protocol (PDCP) entity corresponding to an SL signaling radio bearer (SRB) of a target address fails, wherein the SL SRB comprises SL-SRB 2 and SL-SRB 3.

6. The method according to claim 1 or 3, wherein when determining that the radio link failure occurs in the sidelink interface of the terminal, the method further comprises:
if the terminal is in a radio resource control (RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

7. The method according to claim 6, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

8. The method according to claim 1, wherein when the beam failure occurs on the one or more target objects of the sidelink interface, sending the first message to the network device comprises:
if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

9. The method according to claim 1 or 8, wherein the first message comprises at least one or more of:
that the beam failure occurs in the terminal;
a target object identifier of a target object on which the beam failure occurs in the terminal.

10. The method according to claim 8, further comprising:
receiving a third message from the network device, wherein the third message carries information of a first target object, the first target object is used to assist with beam failure recovery of the one or more target objects;
performing beam failure recovery of the sidelink interface using the first target object.

11. A beam failure processing method applied to a network device, the method comprising:
receiving a first message from a terminal, wherein the first message is used to indicate that a beam failure occurs in a sidelink interface of the terminal; and/or
receiving a second message from the terminal, wherein the second message is used to indicate that a radio link failure on the sidelink interface of the terminal.

12. The method according to claim 11, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

13. The method according to claim 11, wherein the first message comprises at least one or more of:
that the beam failure occurs in the terminal;
a target object identifier of a target object on which the beam failure occurs in the terminal.

14. The method according to claim 11, wherein after receiving the first message from the terminal, the method further comprises at least one or more of:
deactivating or de-configuring a target object on which the beam failure of the terminal occurs;
sending a third message to the terminal, wherein the third message carries information of a first target object, the first target object is used to assist with beam failure recovery of the one or more target objects.

15. A terminal, comprising:
a memory, a transceiver, and a processor,
wherein the memory is used to store a computer program; the transceiver is used to receive and send data under control of the processor; and the processor is used to read the computer program and perform following operations:
when a beam failure occurs on one or more target objects of a sidelink interface, performing following operations:
determining that a radio link failure occurs in the sidelink interface of the terminal; or
sending a first message to a network device, wherein the first message is used to indicate that a beam failure occurs in the sidelink interface of the terminal; or
performing beam failure recovery on at least one target object other than the one or more target objects;
wherein the one or more target objects comprise a sidelink interface carrier or a bandwidth part (BWP).

16. The terminal according to claim 15, wherein the processor is used to read the computer program and perform the following operations:
if a number of target objects used by the terminal in the sidelink interface is one or a number of target objects in an active state is one, and the beam failure of the terminal occurs on the one target object, determining that the radio link failure of the terminal occurs in the sidelink interface.

17. The terminal according to claim 15, wherein the processor is used to read the computer program and perform following operations:
if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

18. The terminal according to claim 17, wherein the first condition comprises at least one or more of following:
that the beam failure of the terminal occurs on all of the one or more target objects of the sidelink interface;
that the beam failure of the terminal occurs on some of the one or more target objects of the sidelink interface, and the radio link failure occurs on a target object other than the some of the one or more target objects in the sidelink interface;
that the beam failure of the terminal occurs on some of the one or more target objects of the sidelink interface, and beam failure recovery performed by the terminal using a target object other than the some of the one or more target objects fails.

19. The terminal according to claim 15 or 18, wherein the processor is used to read the computer program and perform following operations:
determining, under a second condition, that the radio link failure of the terminal occurs on the one or more target objects;
wherein the second condition comprises at least one or more of:
that a number of retransmissions indicated by a sidelink (SL) radio link control (RLC) entity on the one or more target objects reaches a maximum number of retransmissions;
a T400 timer corresponding to a target address or the one or more target objects expires;
that a hybrid automatic repeat request (HARQ) discontinuous transmission (DTX) count received by the terminal reaches a maximum value, wherein the HARQ DTX count is a continuous HARQ DTX count for the one or more target objects or for a target address;
that an integrity check of a packet data convergence protocol (PDCP) entity corresponding to an SL signaling radio bearer (SRB) of a target address fails, wherein the SL SRB comprises SL-SRB 2 and SL-SRB 3.

20. The terminal according to claim 15 or 17, wherein the processor is used to read the computer program and perform following operations:
if the terminal is in a radio resource control (RRC) connected state, or the terminal is in an RRC connected state and a resource allocation mode scheduled by a network is used in the sidelink interface, sending a second message to the network device, wherein the second message indicates that the radio link failure occurs on the sidelink interface of the terminal.

21. The terminal according to claim 20, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

22. The terminal according to claim 15, wherein the processor is used to read the computer program and perform following operations:
if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

23. The terminal according to claim 15 or 22, wherein the first message comprises at least one or more of:
that the beam failure occurs in the terminal;
a target object identifier of a target object on which the beam failure occurs in the terminal.

24. The terminal according to claim 22, wherein the processor is used to read the computer program and perform following operations:
receiving a third message from the network device, wherein the third message carries information of a first target object, the first target object is used to assist with beam failure recovery of the one or more target objects;
performing beam failure recovery of the sidelink interface using the first target object.

25. A network device, comprising:
a memory, a transceiver, and a processor, wherein the memory is used to store a computer program; the transceiver is used to receive and send data under control of the processor; and the processor is used to read the computer program and perform following operations:
receiving a first message from a terminal, wherein the first message is used to indicate that a beam failure occurs in a sidelink interface of the terminal; and/or
receiving a second message from the terminal, wherein the second message is used to indicate that a radio link failure on the sidelink interface of the terminal.

26. The network device according to claim 25, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

27. The network device according to claim 25, wherein the first message comprises at least one or more of:
that the beam failure occurs in the terminal;
a target object identifier of a target object on which the beam failure occurs in the terminal.

28. The network device according to claim 25, wherein the processor is used to read the computer program and perform at least one or more of:
deactivating or de-configuring a target object on which the beam failure of the terminal occurs;
sending a third message to the terminal, wherein the third message carries information of a first target object, the first target object is used to assist with beam failure recovery of the one or more target objects.

29. A beam failure processing apparatus, comprising:
a first processing unit, used to when a beam failure occurs on one or more target objects of a sidelink interface, perform following operations:
determining that a radio link failure occurs in the sidelink interface of the terminal; or
sending a first message to a network device, wherein the first message is used to indicate that a beam failure occurs in the sidelink interface of the terminal; or
performing beam failure recovery on at least one target object other than the one or more target objects;
wherein the one or more target objects comprise a sidelink interface carrier or a bandwidth part (BWP).

30. The apparatus according to claim 29, wherein the first processing unit is configured specifically to perform following:
if a number of target objects used by the terminal in the sidelink interface is one or a number of target objects in an active state is one, and the beam failure of the terminal occurs on the one target object, determining that the radio link failure of the terminal occurs in the sidelink interface.

31. The apparatus according to claim 29, further comprising:
a first determining unit, used to perform following:
if a number of target objects used by the terminal in the sidelink interface is greater than one or a number of target objects in an active state is greater than one, and the beam failure of the terminal occurs in the one or more target objects, determining that the radio link failure of the terminal occurs in the sidelink interface when a first condition is met.

32. The apparatus according to claim 31, wherein the first condition comprises at least one or more of:
that the beam failure of the terminal occurs on all of the one or more target objects of the sidelink interface;
that the beam failure of the terminal occurs on some of the one or more target objects of the sidelink interface, and the radio link failure occurs on a target object other than the some of the one or more target objects in the sidelink interface;
that the beam failure of the terminal occurs on some of the one or more target objects of the sidelink interface, and beam failure recovery performed by the terminal using a target object other than the some of the one or more target objects fails.

33. The apparatus according to claim 29 or 32, further comprising:
a second determining unit, used to determine, under a second condition, that the radio link failure of the terminal occurs on the one or more target objects;
wherein the second condition comprises at least one or more of:
that a number of retransmissions indicated by a sidelink (SL) radio link control (RLC) entity on the one or more target objects reaches a maximum number of retransmissions;
a T400 timer corresponding to a target address or the one or more target objects expires;
that a hybrid automatic repeat request (HARQ) discontinuous transmission (DTX) count received by the terminal reaches a maximum value, wherein the HARQ DTX count is a continuous HARQ DTX count for the one or more target objects or for a target address;
that an integrity check of a packet data convergence protocol (PDCP) entity corresponding to an SL signaling radio bearer (SRB) of a target address fails, wherein the SL SRB comprises SL-SRB 2 and SL-SRB 3.

34. The apparatus according to claim 29 or 31, wherein when determining that the radio link failure occurs in the sidelink interface of the terminal, the apparatus further comprises:
a first sending unit, used to if the terminal is in a radio resource control (RRC) connected state, or the terminal is in an RRC connected state and a resource allocation mode scheduled by a network is used in the sidelink interface, send a second message to the network device, wherein the second message indicates that the radio link failure occurs on the sidelink interface of the terminal.

35. The apparatus according to claim 34, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

36. The apparatus according to claim 29, wherein the first processing unit is specifically used to perform:
if the terminal is in an RRC connected state, or the terminal is in an RRC connected state and a resource allocation mode scheduled by a network is used in the sidelink interface, sending the first message to the network device when the beam failure occurs on the one or more target objects of the sidelink interface, wherein the first message is used to indicate that the beam failure occurs in the sidelink interface of the terminal.

37. The apparatus according to claim 29 or 36, wherein the first message comprises at least one or more of:
that the beam failure occurs in the terminal;
a target object identifier of a target object on which the beam failure occurs in the terminal.

38. The apparatus according to claim 36, further comprising:
a second receiving unit, used to receive a third message from the network device, wherein the third message carries information of a first target object, the first target object is used to assist with beam failure recovery of the one or more target objects;
a second processing unit used to perform beam failure recovery of the sidelink interface using the first target object.

39. A beam failure processing apparatus, comprising:
a first receiving unit, used to receive a first message from a terminal, wherein the first message is used to indicate that a beam failure occurs in a sidelink interface of the terminal; and/or
receive a second message from the terminal, wherein the second message is used to indicate that a radio link failure on the sidelink interface of the terminal.

40. The apparatus according to claim 39, wherein the second message comprises at least one or more of:
that a beam failure occurs in the terminal;
a target object identifier of a target object on which the beam failure of the terminal occurs;
a target object identifier of a target object on which the radio link failure of the terminal occurs;
a failure reason corresponding to each target object in which the radio link failure of the terminal occurs.

41. The apparatus according to claim 39, wherein the first message comprises at least one or more of:
that the beam failure occurs in the terminal;
a target object identifier of a target object on which the beam failure occurs in the terminal

42. The apparatus according to claim 39, further comprising:
a third processing unit, used to perform at least one of following:
deactivating or de-configuring a target object on which the beam failure of the terminal occurs;
sending a third message to the terminal, wherein the third message carries information of a first target object, the first target object is used to assist with beam failure recovery of the one or more target objects.

43. A processor-readable storage medium storing a computer program, wherein the computer program, when executed by a processor, implements the steps of the beam failure processing method according to any one of claims 1 to 10, or implementing the steps of the beam failure processing method according to any one of claims 11 to 14.
